# EUROPEAN PATENT APPLICATION

(11) **EP 4 664 534 A1**
(43) Date of publication of application: **17.12.2025**
(21) Application number: 24832401.4
(22) Date of filing: 25.06.2024
(51) Int. Cl.: H01M 4/04, H01M 10/04, B65H 43/04, G01B 21/04, H01M 10/42

(54) **BATTERY MANUFACTURING APPARATUS**

(30) Priority: 28.06.2023 KR 20230083433; 29.05.2024 KR 20240070322
(71) Applicant: LG Energy Solution, Ltd., Seoul 07335 (KR)
(72) Inventor: LEE, Dong Yeop, Daejeon 34122 (KR); PARK, Jong Seok, Daejeon 34122 (KR); KANG, Kyu Taek, Daejeon 34122 (KR); HUH, Seung, Daejeon 34122 (KR); PARK, Jae Wan, Daejeon 34122 (KR); KIM, Min Su, Daejeon 34122 (KR); KIM, June Hee, Daejeon 34122 (KR); SHIN, Jong Kwon, Daejeon 34122 (KR); SIM, Min Kyu, Daejeon 34122 (KR); KOH, Jee Yeon, Daejeon 34122 (KR); BAE, In Bong, Daejeon 34122 (KR)
(74) Representative: BCKIP Part mbB
(86) International application number: PCT/KR2024/008805
(87) International publication number: WO 2025/005623

(57) **Abstract**

A battery manufacturing apparatus includes a negative electrode notching device configured to assign a first electrode ID to individual notched electrodes; a first cutting device for separating individual negative electrodes assigned the first electrode ID; a positive electrode notching device configured to assign a second electrode ID to individual notched electrodes; a second cutting device for separating individual positive electrodes assigned the second electrode ID; a stacking device configured to stack the individual positive electrodes and the individual negative electrodes with a separator therebetween; and a roll map creating device.

## Description

### [Cross-Reference to Related Applications]

The present application is a national phase entry of International Application No. PCT/KR2024/008805, filed on June 25, 2024, which claims priority from Korean Patent Application No. 10-2023-0083433, filed on June 28, 2023, and Korean Patent Application No. 10-2024-0070322, filed on May 29, 2024, the disclosures of which are incorporated herein by reference.

### [Technical Field]

The present disclosure relates to a battery manufacturing device, and more particularly to a battery manufacturing device capable of manufacturing battery cells in a zigzag method of stacking while ensuring traceability from the battery cell to the electrode process.

### [Background]

With the technology development and increasing demand for electric vehicles, the demand for secondary batteries is also increasing rapidly. Lithium secondary batteries are widely used as an energy source for various electronic products, including various mobile devices, because of the high energy density, high operating voltage, and excellent preservation and lifespan characteristics.

In the manufacturing process of batteries, which includes the electrode process and the assembly process, it may be necessary to trace back the overall process in case of issues such as defects in semi-finished products or finished products of batteries. In other words, it is necessary to verify which process each component of the battery cell, which is the subject of traceability, was derived from.

In a stacking process, individual negative electrodes and individual positive electrodes are alternately stacked, and there is a need to ensure cell traceability for these.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### [Summary]

The present disclosure is directed to provide a battery manufacturing device capable of manufacturing battery cells in a zigzag method of stacking while ensuring traceability from the battery cell to the electrode process.

In order to solve the technical problem, the present disclosure provides a battery manufacturing device including: a negative electrode notching device configured to assign a first electrode ID to individual notched electrodes; a first cutting device for separating individual negative electrodes to which the first electrode ID is assigned; a positive electrode notching device configured to assign a second electrode ID to individual notched electrodes; a second cutting device for separating individual positive electrodes to which the second electrode ID is assigned; a stacking device configured to stack the individual positive electrodes and the individual negative electrodes with a separator therebetween; and a roll map creating device. The roll map creating device may be configured to create a first roll map indicating process data of the negative electrode on a plane simulating the negative electrode moving between an unwinder and a rewinder of the negative electrode notching device, and to create a second roll map indicating process data of the positive electrode on a plane simulating the positive electrode moving between an unwinder and a rewinder of the positive electrode notching device. The negative electrode notching device may include a first marking device which is capable of marking a mark corresponding to the first electrode ID on an uncoated portion of the negative electrode, and the positive electrode notching device may include a second marking device which is capable of marking a mark corresponding to the second electrode ID on an uncoated portion of the positive electrode.

In some exemplary examples, the roll map creating device may be configured to match the first electrode ID with the first roll map and match the second electrode ID with the second roll map.

In some exemplary examples, the roll map creating device may be configured to match the second electrode IDs of one or more positive electrodes with the first electrode IDs of one or more negative electrodes, and the one or more positive electrodes and the one or more negative electrodes are stacked in the stacking device.

In some exemplary examples, the roll map creating device may be configured to generate a battery cell ID that may be representative of the first electrode IDs of the negative electrodes and the second electrode IDs of the positive electrodes stacked in one battery cell, and to match the first electrode IDs with the second electrode IDs represented by the generated battery cell ID.

In some exemplary examples, the second marking device may be configured to mark a mark corresponding to the second electrode ID with a laser, wherein the second marking device may include a fume collector.

In some exemplary examples, the roll map creating device may be configured to generate a battery cell ID representative of any one of the first and second electrode IDs.

In some exemplary examples, the roll map creating device may be configured to output, for respective battery cell IDs, corresponding first electrode IDs, second electrode IDs, coordinates on a first roll map corresponding to the first electrode IDs, and coordinates on a second roll map corresponding to the second electrode IDs.

In some exemplary examples, the roll map creating device may be configured to update the first roll map based on process data from the first cutting device, and to update the second roll map based on process data from the second cutting device.

In some exemplary examples, the process data may include inspection data and/or measurement data.

In some exemplary examples, the roll map creating device may include a first roll map creating part for creating the first roll map and a second roll map creating part for creating the second roll map, wherein the first roll map creating part is provided within a controller configured to control operation of the negative electrode notching device, and the second roll map creating part is provided within a controller configured to control operation of the positive electrode notching device.

Another aspect of the present disclosure provides a battery manufacturing device comprising a stacking device and a first server. The stacking device comprises: a first reader configured to read a mark on at least a portion of an individual negative electrode, which represents a first electrode ID; a second reader configured to read a mark on at least a portion of an individual positive electrode, which represents a second electrode ID; a stacker configured to stack the individual negative electrodes and the individual positive electrodes, with a separator interposed therebetween, to manufacture a battery cell; and a controller configured to control operation of the stacker, wherein the first server may be configured to assign to the first electrode IDs of the individual negative electrodes and the second electrode IDs of the individual positive electrodes, which is represented by a battery cell ID included in the battery cell.

In some exemplary examples, the battery manufacturing device may further comprise a roll map creating device. The roll map creating device may be configured to create a first roll map indicating process data of the negative electrode on a plane simulating the negative electrode moving between an unwinder and a rewinder of the negative electrode notching device, matching the first electrode ID with the first roll map; and create a second roll map indicating process data of the positive electrode on a plane simulating the positive electrode moving between an unwinder and a rewinder of the positive electrode notching device, matching the second electrode ID with the second roll map.

In some exemplary examples, the roll map creating device may be provided within the first server.

In some exemplary examples, the battery manufacturing device may further include a roll map controller, and the roll map creating device may be provided within the roll map controller.

In some exemplary examples, the first server may be configured to extract from the battery cell IDs first electrode IDs of individual negative electrodes and second electrode IDs of individual positive electrodes included in the battery cell, extract, using the first electrode IDs, coordinates on the first roll map corresponding to the first electrode IDs, and extract, using the second electrode IDs, corresponding coordinates on the second roll map corresponding to the second electrode IDs.

The battery manufacturing device of the present disclosure has the effect of manufacturing battery cells in a zigzag method of stacking while ensuring traceability from the battery cell to the electrode process.

However, the technical effects that can be obtained in exemplary examples of the present disclosure is not limited to the above-described effects, and other effects not mentioned can be clearly understood by a person skilled in the art from the description of the disclosure described below. In other words, unintended effects of implementing the exemplary examples of the present disclosure may also be derived from the exemplary examples of the present disclosure by a person skilled in the art.

### [Brief Description of the Drawings]

FIG. 1 is a conceptual diagram illustrating a battery manufacturing device according to an embodiment of the present disclosure.
FIG. 2 is a schematic diagram conceptually illustrating a negative electrode notching device and an upper system connected thereto.
FIG. 3 is a schematic diagram conceptually illustrating a positive electrode notching device and an upper system connected thereto.
FIG. 4 is a schematic diagram schematically illustrating a first cutting device and a second cutting device and an upper system connected thereto.
FIG. 5 is a conceptual diagram schematically illustrating a stacking device according to an embodiment of the present disclosure.
FIG. 6 is a schematic diagram conceptually illustrating an important part of the stacking device of FIG. 5 and an upper system connected thereto.
FIG. 7 is a flow diagram illustrating a battery manufacturing method according to an embodiment of the present disclosure.

### [Detailed Description]

Hereinafter, preferred exemplary examples of the present disclosure concept will be described in detail with reference to the accompanying drawings. However, exemplary examples of the present disclosure concept may be modified in various different forms, and it should not be interpreted that the scope of the present disclosure concept is limited by the exemplary examples described below. It is preferred that the exemplary examples of the present disclosure be interpreted as provided to explain the present disclosure more fully to a person skilled in the art. Herein, the same reference numerals may refer to the same elements. In addition, the various elements and areas of the drawings are schematically illustrated. Accordingly, the present disclosure is not limited by the relative sizes or spacing illustrated in the accompanying drawings.

Terms such as first, second, and the like may be used to describe various components, but the components are not limited by the terms. The terms are used only for the purpose of distinguishing one component from the other component. For example, a first component may be named a second component, and vice versa, a second component may be named a first component, without departing from the scope of the present disclosure concept.

The terms used in the present description are used merely to explain specific exemplary examples and are not intended to limit the present disclosure concept. Expressions in the singular include the plural unless the context clearly indicates otherwise. The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

Unless otherwise defined, all terms used herein, including technical terms and scientific terms, should have the same meaning as commonly understood by a person skilled in the art of the technical field to which the present disclosure concept belongs. In addition, it should be understood that terms such as commonly used, dictionary-defined terms are to be construed to have a meaning consistent with the meaning they have in the context of the technology to which they relate and are not to be construed in an excessively formal sense unless explicitly defined herein.

Specific process sequences may be performed differently from the order described when some exemplary examples are otherwise implementable. For example, two processes described in succession may be performed substantially simultaneously or may be performed in an order opposite to the order described.
In the accompanying drawings, for example, variations of the depicted forms may be expected, depending on manufacturing technology and/or tolerances. Accordingly, exemplary examples of the present disclosure should not be construed as limited to the specific forms of the areas shown herein, and should include, for example, variations in form resulting from manufacturing processes. All terms "and/or" used herein are included each and every combination of one or more of the components mentioned.

In addition, as used herein, the term "process data" may refer to measurement data and/or inspection data. The measurement data refers to a quantitative evaluation of a measured physical quantity or physicochemical characteristics, and the inspection data.

### (First Exemplary Example)

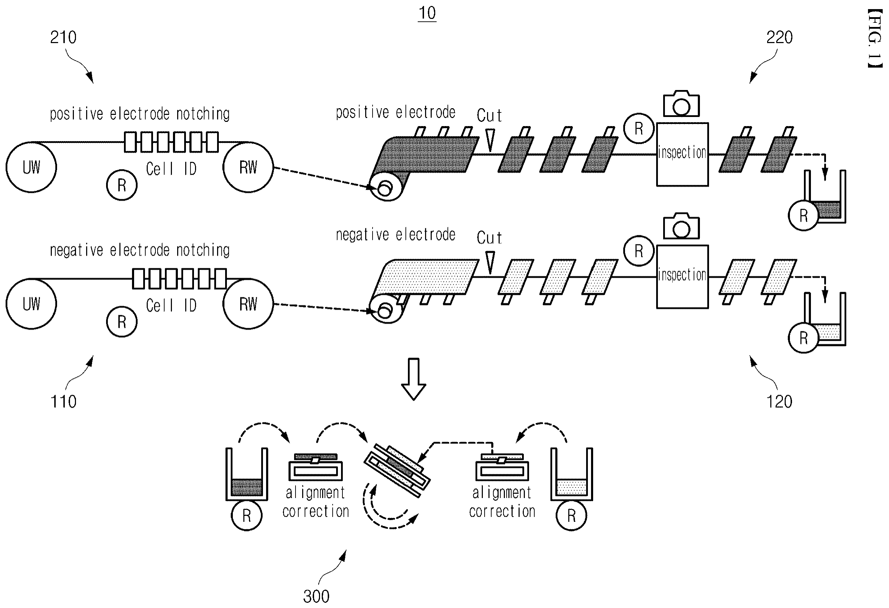

FIG. 1 is a conceptual diagram illustrating a battery manufacturing device 10 according to an embodiment of the present disclosure.

Referring to FIG. 1, the battery manufacturing device 10 includes a negative electrode notching device 110 configured to notch a negative electrode, a positive electrode notching device 210 configured to notch a positive electrode, a first cutting device 120 for separating individual negative electrodes, a second cutting device 220 for separating individual positive electrodes, a stacking device 300 configured to stack individual positive and individual negative electrodes, and a roll map creating device.

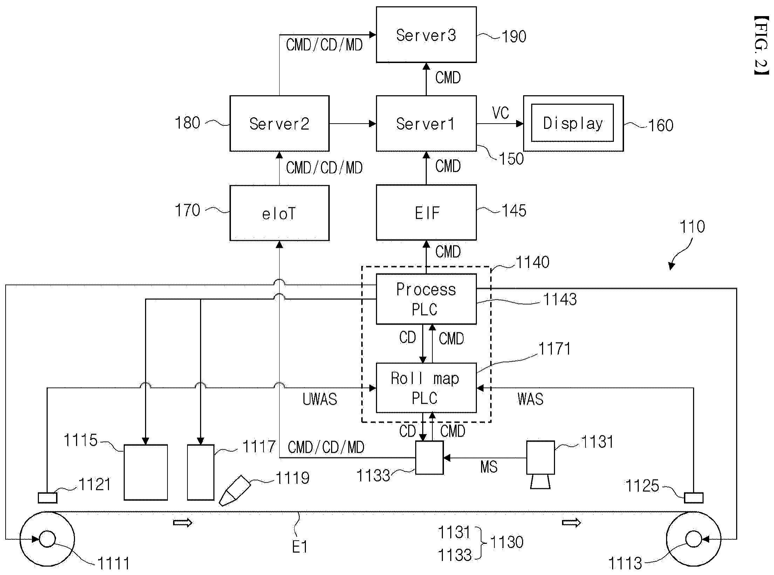

FIG. 2 is a schematic diagram conceptually illustrating a negative electrode notching device and an upper system connected thereto.

Referring to FIG. 2, the negative electrode notching device 110 may include an unwinder 1111, a rewinder 1113, a notching machine 1115, a first rotary encoder 1121, a second rotary encoder 1125, a measuring instrument 1130, a first marking device 1117, a roll map programmable logic controller (PLC) 1171, and a process PLC 1143.

In the unwinder 1111, an electrode roll manufactured in a previous electrode process may be provided, and the unwinder 1111 may be configured to unwind the electrode roll. The rewinder 1113 may be configured to wind the notched electrode E1 that is unwound from the unwinder 1111.

The first rotary encoder 1121 may be configured to detect the extent to which the electrode is unwound by the unwinder 1111. The first rotary encoder 1121 may be configured to be contact or non-contact. In some exemplary examples, the first rotary encoder 1121 may be configured to sense a length by which the electrode is unwound by the unwinder 1111. Accordingly, the first rotary encoder 1121 may be configured to generate an unwinding amount signal (UWAS) representative of the length to which the electrode is unwound and transmit it to the roll map PLC 1171 described in more detail hereinafter. The roll map PLC 1171 may be configured to collect unwinding amount data based on the received unwinding amount signal (UWAS).

The second rotary encoder 1125 may be configured to detect the extent to which the electrode is wound by the rewinder 1113. The second rotary encoder 1125 may be configured to be contact or non-contact. In some exemplary examples, the second rotary encoder 1125 may be configured to sense the length by which the electrode is wound by the rewinder 1113. Accordingly, the second rotary encoder 1125 may be configured to generate a winding amount signal (WAS) representative of the length to which the electrode is wound and transmit it to the roll map PLC 1171 described in more detail hereinafter. The roll map PLC 1171 may be configured to collect winding amount data based on the received winding amount signal (WAS).

The measuring instrument 1130 may be configured to measure an electrode E1 to collect measurement data MD of the electrode E1 as it is transferred from the unwinder 1111 to the rewinder 1113. The measuring instrument 1130 may measure the electrode E1 using a scanning method. In some exemplary examples, the measuring instrument 1130 may move along a width direction of the electrode E1. In some exemplary examples, during a one-time scanning of the measuring instrument 1130, the measuring instrument 1130 may move from one end of the width direction of the electrode E1 to the other end of the width direction. While the measuring instrument 1130 performs the scanning of the width direction, the electrode E1 may be moved in the length direction of the electrode by the unwinder 1111 and the rewinder 1113.

The notching machine 1115 may be a device configured to mechanically apply punching processing to form electrode tabs with regard to a metal foil in which the negative electrode active material is formed to a substantially uniform thickness and width, or to cut and remove a predetermined portion using a laser.

The notching machine 1115 may use any device known in the art to which the present disclosure belongs. In some exemplary examples, the notching machine 1115 may be a press device for notching, for example, including a driving part configured to move a notching mold top and bottom in a regular cycle, and as the notching mold moves down, it may punch the edges of the electrode E1 to form lead tabs of a predetermined shape (e.g., rectangular).

The negative electrode notching device 110 may be configured to assign a first electrode ID to an uncoated portion of the metal foil, on which the negative electrode active material is not formed. For this, the negative electrode notching device 110 may mark a mark corresponding to the first electrode ID on the uncoated portion of the electrode. The mark corresponding to the first electrode ID may be marked by a first marking device 1117.

In some exemplary examples, the mark may be a barcode or a quick response (QR) code. The first marking device 1117 may be configured to mark the mark on the uncoated portion, for example, with a laser.

The negative electrode notching device 110 may comprise a fume collector 1119 capable of absorbing metal powder. In particular, the fume collector 1119 may be configured to remove metal powder generated when the marks are marked on the uncoated portion of the electrode E1 using the laser. In some exemplary examples, the fume collector 1119 may be configured to absorb the metal powder or adsorb it using electrostatic attractive forces.

The measurement data MD may include a test result that is expressed numerically. For example, the measurement data (MD) may include coordinates and dimensions of a notched portion on the electrode E1. In some exemplary examples, the measurement data MD may further include loading amount data of the coating material on the electrode, dimensional data such as a width of an insulating material provided on the coating material and an overlap width between the coating material and the insulating material, mismatching data between the coating portion lanes on the upper surface of the electrode and the coating portion lanes on the lower surface of the electrode, etc. Here, the loading amount indicates the amount of coating material loaded per unit area of the electrode E1, which may be an area density of the coating material. The measurement data MD may be processed by a set method, such that the measured portion of the electrode may be determined whether it is defective or not.

The measuring instrument 1130 may include a sensing part 1131 and a processing part 1133. The sensing part 1131 may be configured to sense a physical quantity of the electrode E1 to generate a measurement signal MS. For example, the sensing part 1131 may include a time delay and integration (TDI) camera, a complementary metal oxide semiconductor (CMOS) image sensor, a time of flight (TOF) sensor, etc. The sensing part 1131 may also include an emitter and receiver configured to perform measurements using non-destructive signals, such as ultrasound, microwaves, terahertz waves, infrared light, etc. In some exemplary examples, the sensing part 1131 may include analog and/or digital sensors, such as biosensors, chemical sensors, composition sensors, current and/or power meters, air quality sensors, gas sensors, hall effect sensors, brightness level sensors, optical sensors, etc. In some exemplary examples, the measuring instrument 1130 may also include pressure sensors, temperature sensors, ultrasonic sensors, proximity sensors, door status sensors, motion tracking sensors, humidity sensors, visible and infrared sensors, cameras, etc.

The negative electrode notching device 110 may further include an inspection device configured to inspect the electrode E1 to collect inspection data. The inspection data may include a determination of the quality of a portion of the electrode E1 and process events. For example, the inspection data may include data of an appearance of the electrode collected by an image-based device, such as a machine vision, data of breaks and joints in the electrode, data of a portion of the electrode on which a sampling inspection was performed, data of a portion of the electrode planned to be scrapped, and data of the scrapped portion of the electrode, data on whether the coating material and the insulating material on the electrode are defective or not, data of reference points indicating the location of the electrode, and data of defects such as pinhole defects, crater defects, line defects, crack defects, sideling defects, island defects, fold defects, wrinkle defects, indentation defects, and dent defects. The reference points may be formed at predetermined intervals on the electrode, and the location of other elements on the electrode may be located based on the reference points. The inspection device may be any one of a color sensor, a joint sensor, a reference point sensor, and a machine vision.

The measurement data (MD) and inspection data described above may be time series data. The measurement data (MD) and inspection data may be temporally ordered. Temporal ordering is a major characteristic of time series data, in which events are organized in the order in which they occur and arrive for processing. In other words, the measurement data (MD) and the inspection data may be stored based on a time point at which the measurement and inspection were performed, and the measurement data (MD) and the inspection data may be related to time. In addition, the measurement data (MD) and inspection data may be related to a position on the electrode identified based on the reference point.

The processing part 1133 may be configured to collect the measurement signals MS sensed by the sensing part 1131 to generate the measurement data MD. The processing part 1133 may be wired or wirelessly connected to the sensing part 1131.

The roll map PLC 1171 may be in operative communication with the first and second rotary encoders 1121, 1125, the measuring instrument 1130, and additional measuring instruments and inspection devices through a data network, either wired or wireless. The data network may be one-way or two-way. The data network may be implemented by a public and/or specialized network using physical channels, Wi-Fi, Bluetooth, and/or other frequency bands. The first and second rotary encoders 1121, 1125, the measuring instrument 1130, and additional measuring instruments and inspection devices may be configured to collect data from the equipment, work products, semi-finished products, and products within the negative electrode notching device 110, or to generate signals for collecting data.

The roll map PLC 1171 may be configured to transmit coordinate data (CD) to the processing part 1133. The processing part 1133 may be configured to associate measurement data (MD) with the coordinate data (CD) to generate coordinate-associated measurement data (CMD). In general, the measurement data MD may be processed based on the trigger points. Examples of processing the measurement data (MD) may include storing the measurement data (MD), manipulating the measurement data (MD) (e.g., generating coordinate-associated measurement data (CMD)), and transmitting the measurement data (MD).

As a non-limiting example, a trigger point for processing the measurement data (MD) may be the completion of scanning. For example, the sensing part 1131 may scan the electrode in a width direction of the electrode, and for each scanning, the measurement data MD may be stored, processed, modulated, and transmitted. In other examples, the trigger point may be the completion of a plurality of scanning, or the completion of a portion of scanning.

The processing part 1133 may be configured to transmit the coordinate-associated measurement data (CMD) to the roll map PLC 1171. The roll map PLC 1171 may be configured to transmit the coordinate-associated measurement data (CMD) to the process PLC 1143.

The coordinate-associated measurement data (CMD) transmitted to the process PLC 1143 may be conveyed to the first server 150 through the process PLC 1143 and the equipment interface (EIF) 145. The process PLC 1143 and EIF 145 may relay communication of data, including measurement data (CMD), between the first server 150 and the roll map PLC 1171. However, not limited thereto, the roll map PLC 1171 may be configured to transmit coordinate-associated measurement data (CMD) directly to the first server 150.

The process PLC 1143 may be configured to control the operation of the unwinder 1111, the rewinder 1113, and the notching machine 1115. The process PLC 1143 may be configured to generate signals for operating and stopping the unwinder 1111, the rewinder 1113, and the notching machine 1115.

In some exemplary examples, each of the roll map PLC 1171 and the process PLC 1143 may be part of one PLC, the first PLC 1140.

For control of the notching process, a communication channel may be installed between the process PLC 1143 and the first server 150 via the EIF 145 and connecting the process PLC 1143 and the first server 150. Accordingly, the data transmission through the process PLC 1143 may be performed by the first and second rotary encoders 1121, 1125 and the measuring instrument 1130 directly transmitting the unwinding amount signal (UWAS), winding amount signal (WAS), and measurement signal (MS) to the first server 150, and compared to the case in which the roll map PLC 1171 directly transmits the measurement data (CMD) to the first server 150, the resources needed for the installation of communication channels can be reduced, and the data processing and management may be efficiently performed.

The EIF 145 may be a device for communication between the process PLC 1143 of the manufacturing facility and the first server 150, which is an upper server.

In some exemplary examples, the first server 150 may include a first roll map creating part configured to generate a first roll map. The first roll map may be a process data of the electrode E1 on a plane simulating the electrode E1 moving between the unwinder 1111 and the rewinder 1113. In this case, the first server 150 may act as a roll map creating device.

In some exemplary examples, the roll map PLC 1171 may include a first roll map creating part configured to generate the first roll map. In this case, the roll map PLC 1171 may act as a roll map creating device. Hereinafter, the case in which the first server 150 creates the first roll map will be described. However, the roll map PLC 1171 may also be configured to create a first roll map in an identical, equivalent, or analogous manner to the configuration associated with the first server 150 creating the first roll map.

The first roll map may be generated in a lot unit formed by winding and cutting of the electrode E1. The first roll map may include data on specifications of the lots. The specifications of the lot may include, for example, a lot number, a length of the wound electrode, a width of the electrode, and a material and composition used in the processing of the electrode.

The first server 150 may match the coordinate position of the first roll map generated with the first electrode ID. Here, matching the coordinate position of the first roll map with the first electrode ID may mean identifying which portions of the electrode E1 represented by the first roll map were manufactured as electrodes having uncoated portions marked with the first electrode ID. In other words, the first server 150 may define positions corresponding to the first electrode ID based on the reference points on the electrode E1.

According to exemplary examples, the first server 150 may be a data processing system that supports various activities necessary to manage the manufacturing of the secondary battery, such as work schedule management, work instructions, quality management, work performance aggregation, and the like. The first server 150 may be, for example, a manufacturing execution system (MES). The first server 150 may be configured to perform input, processing, output, and communication of data needed for assembling electrodes, such as a notching process, a cutting process, and a stacking process.

The first server 150 may generate a visualization command (VC) for visualizing the first roll map. The first server 150 may convey the visualization command (VC) to a display device 160, and the display device 160 may visualize the first roll map to display the visualized first roll map.

In some exemplary examples, the processing part 1133 may be configured to convey coordinate-associated measurement data (CMD) and/or coordinate data (CD) to the second server 180. According to exemplary examples, the coordinate-associated measurement data (CMD) and coordinate data (CD) may be conveyed to the second server 180 via the eIoT 170. The eIoT 170 may be a device for communication between the processing part 1133 and the second server 180.

In some exemplary examples, the second server 180 may be configured to store and process measurement data (MD) of the electrodes. The second server 180 may continuously monitor the processing of the electrodes based on the measurement data MD, thereby managing the quality of the processing of the electrodes. According to exemplary examples, the second server 180 may be a statistical process controller (SPC). By collecting and analyzing manufacturing data in real or nearly in real-time, the second server 180 may timely identify problem conditions and provide alarms to operators before potential problems occur.

The third server 190 may be configured to store coordinate-associated measurement data (CMD) transmitted from the first server 150. The third server 190 may be configured to store measurement data (MD) transmitted from the second server 180. If the first server 150 is an MES and the second server 180 is an SPC, they may be unsuitable for long-term storage of the coordinate-associated measurement data (CMD), evaluation data (ED), and measurement data (MD). The third server 190 may be a data warehouse, for example, and may store the coordinate-associated measurement data (CMD), evaluation data (ED), and measurement data (MD) for a long period of time, such as based on the quality assurance period of a product.

The processing part 1133, the roll map PLC 1171, the process PLC 1143, the EIF 145, the first server 150, the eIoT 170, the second server 180, and the third server 190 may be implemented as hardware, firmware, software, and combinations thereof. For example, the processing part 1133, the roll map PLC 1171, the process PLC 1143, the EIF 145, the first server 150, the eIoT 170, the second server 180, and the third server 190 may include computing devices such as general purpose computers, workstation computers, desktop computers, laptop computers, tablet computers, and the like. The processing part 1133, the roll map PLC 1171, the process PLC 1143, the EIF 145, the first server 150, the eIoT 170, the second server 180, and the third server 190 may include any one of simple controllers, complex processors such as microprocessors, CPU, GPU, and the like, processors configured by software, and dedicated hardware and firmware. The processing part 1133, the roll map PLC 1171, the process PLC 1143, the EIF 145, the first server 150, the eIoT 170, the second server 180, and the third server 190 may be implemented by, for example, general purpose computer processors or application specific hardware such as Digital Signal Process (DSP), Field Programmable Gate Array (FPGA), and Application Specific Integrated Circuit (ASIC).

The first server 150 and the second server 180 may generate a first roll map and an intermediate roll map. Because the first server 150 stores and processes a lot of data for general manufacturing management other than the first roll map, the first roll map stored on the first server 150 may include processed and simplified coordinate-associated measurement data (CMD) instead of the original measurement data (MD). The second server 180 may store the original measurement data (MD) to operate as an SPC. The second server 180 may transmit measurement data (MD) corresponding to a selected portion of the first roll map in response to a command from the first server 150.

The intermediate roll map may further include the measurement data (MD) associated with the first roll map; in other words, the intermediate roll map may further include, in addition to the first roll map, measurement data (MD) that is the original data. The measurement data (MD) may be associated with the first roll map based on a time value. Accordingly, the intermediate roll map may provide additional insight into the quality of the work product, performance of the process, overall equipment effectiveness (OEE) drill-down, anomaly detection, traceability, preventive maintenance, and predictive alarms.

The first server 150, the second server 180, and the third server 190 may include a physical server or a cloud server. The first server 150, the second server 180, and the third server 190 may provide data and analytics results to an operator through various frameworks. The frameworks may include protocols that support transmitting data so that the display device 160 may visualize the data through a user interface and provide updated visualizations as new data is calculated by the first server 150 and the second server 180. The protocol supporting transmitting the data may utilize HTML, JavaScript, and/or JSON.

The first server 150, the second server 180, and the third server 190 may include various Application Programming Interface (API) for storing data in databases and other data management tools. The API may also be used for retrieving data from the databases of various data management systems. The data management system may provide access to the database, pull data from the database, retrieve data from the database, and generate metrics. In this context, metrics are tools for visualizing data. Metrics include time-serial generated measurements and may be used to monitor an application and generate status warnings.

The negative electrode notching device 110 may implement a plug-in architecture with an API for data acquisition to provide plug-and-play connection of the measuring instrument 1130 and additional measuring instruments and inspection devices. Accordingly, resources at a particular process step and at a particular site may be easily relocated to other processes and other sites, or new resources may be easily introduced at each process step and site.

The data network between the elements of the negative electrode notching device 110 may include various types of communication channels, including one-way, two-way wired, and wireless communications. In one example, the data network may include an industrial protocol network such as OPC, Modbus, ProfiNet, etc. The communication channels may be dedicated conduit communications such as Universal Serial Bus (USB), IEEE 802 (Ethernet), IEEE 1394 (FireWire), or other high-speed data communication standards.

In some examples, the negative electrode notching device 110 may further comprise a manual input system that allows an operator to input manufacturing data. The negative electrode notching device 110 may allow for data input by an operator using an input tool and computer-based input of manufacturing data, such as scraping an excel file.

According to some exemplary examples, the operations of the processing part 1133, the roll map PLC 1171, the process PLC 1143, the EIF 145, the first server 150, the eIoT 170, the second server 180, and the third server 190 may be implemented as commands stored on a machine-readable medium that can be read and executed by one or more processors. Here, the machine-readable medium may include any mechanism for storing and/or transmitting information in a form readable by a machine (e.g., a computing device). For example, the machine-readable medium may include Read Only Memory (ROM), Random Access Memory (RAM), magnetic disk storage media, optical storage media, flash memory, electrical, optical, acoustic, or other forms of propagated signals (e.g., carrier waves, infrared signals, digital signals, etc.), and any other signals.

The processing part 1133, the roll map PLC 1171, the process PLC 1143, the EIF 145, the first server 150, the eIoT 170, the second server 180, and the third server 190 may comprise firmware, software, routines, and commands for performing the operations described above, or any of the processes described below. For example, the firmware, software, routines, and commands of the processing part 1133, the roll map PLC 1171, the process PLC 1143, the EIF 145, the first server 150, the eIoT 170, the second server 180, and the third server 190 may be instantiated in memory.

The processing part 1133, for example, may include software configured to receive coordinate data (CD), generate coordinate-associated measurement data (CMD), and transmit measurement data (MD), coordinate data (CD), and coordinate-associated measurement data (CMD).

The roll map PLC 1171, for example, may include software configured to collect coordinate data (CD), receive coordinate-associated measurement data (CMD), and transmit coordinate data (CD) and coordinate-associated measurement data (CMD).

The process PLC 1143 may include software configured to generate control signals for controlling the unwinder 1111, the rewinder 1113, and the notching machine 1115 based on the product ID and the product recipe, receive coordinate data (CD) and coordinate-associated measurement data (CMD), and transmit coordinate data (CD) and coordinate-associated measurement data (CMD).

The EIF 145 may include software for relaying the transmission of data and information between the process PLC 1143 and the first server 150. More specifically, the EIF 145 may include software configured to perform flow control, error control, synchronization, sequence control, addressing, multiplexing, routing, and formatting of communications between the process PLC 1143 and the first server 150.

The first server 150, for example, may include software configured to convey product ID and product recipes to the process PLC 1143 and generate a first roll map based on coordinate-associated measurement data (CMD).

The eIoT 170 may include software configured to collect, store, process, and transmit coordinate data (CD), coordinate-associated measurement data (CMD), and/or time serial data such as measurement data (MD).

The second server 180 may include software configured to store coordinate data (CD), coordinate-associated measurement data (CMD), and/or time serial data such as measurement data (MD), monitor a process based on the time series data, coordinate data (CD), and/or coordinate-associated measurement data (CMD), and transmit the time series data, coordinate data (CD), and/or coordinate-associated measurement data (CMD) in response to a request of the first server 150.

The third server 190 may include software configured to receive and store the coordinate-associated measurement data (CMD), evaluation data (ED), and/or measurement data (MD), and retrieve the coordinate-associated measurement data (CMD), evaluation data (ED), and/or measurement data (MD).

However, this is for ease of description only, and the operations of the processing part 1133, the roll map PLC 1171, the process PLC 1143, the EIF 145, the first server 150, the eIoT 170, the second server 180, and the third server 190 described above may be caused by other devices executing computing devices, distributed computing devices, processors, firmware, software, routines and commands, etc.

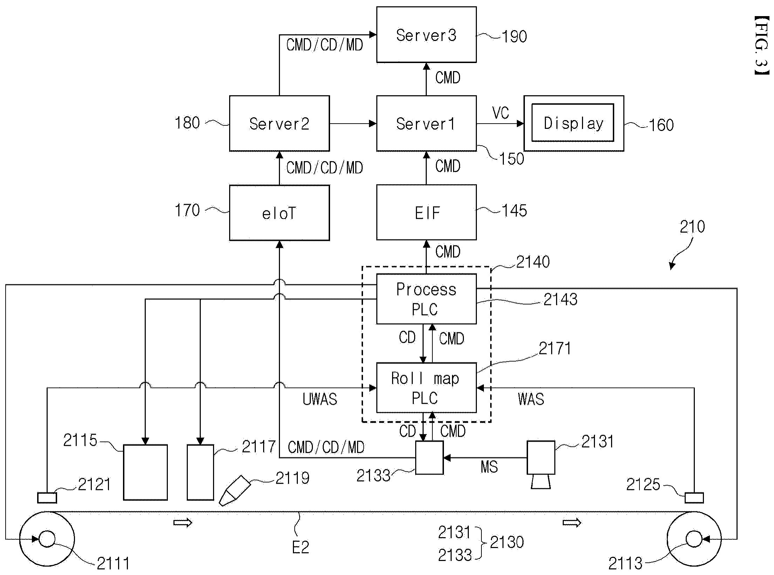

FIG. 3 is a schematic diagram conceptually illustrating a positive electrode notching device and an upper system connected thereto.

Referring to FIG. 3, the positive electrode notching device 210 may include an unwinder 2111, a rewinder 2113, a notching machine 2115, a first rotary encoder 2121, a second rotary encoder 2125, a measuring instrument 2130, a second marking device 2117, a roll map programmable logic controller (PLC) 2171, and a process PLC 2143.

The configurations of the unwinder 2111, the rewinder 2113, the third rotary encoder 2121, and the fourth rotary encoder 2125 are the same as the configurations of the unwinder 1111, the rewinder 1113, the first rotary encoder 1121, and the second rotary encoder 1125 described with reference to FIG. 2, respectively. Therefore, a detailed description thereof is omitted herein.

The notching machine 2115 may be a device configured to mechanically apply punching processing to form electrode tabs with regard to a metal foil in which the positive electrode active material is formed to a substantially uniform thickness and width, or to cut and remove a predetermined portion using a laser.

The notching machine 2115 may be any device known in the art to which the present disclosure belongs. In some exemplary examples, the notching machine 2115 may be a press device for notching, such as including a driving part configured to move a notching mold top and bottom in a regular cycle, and as the notching mold moves down, it may punch the edges of the electrode E2 to form lead tabs of a predetermined shape (e.g., rectangular).

The positive electrode notching device 210 may be configured to assign a second electrode ID to an uncoated portion of the metal foil, on which the positive electrode active material is not formed. For this, the positive electrode notching device 210 may mark a mark corresponding to the second electrode ID on the uncoated portion of the electrode. The mark corresponding to the second electrode ID may be marked by a second marking device 2117.

In some exemplary examples, the mark may be a barcode or a quick response (QR) code. The second marking device 2117, for example, may be configured to mark the mark on the uncoated portion with a laser.

The positive electrode notching device 210 may comprise a fume collector 2119 capable of absorbing metal powder. In particular, the fume collector 2119 may be configured to remove metal powder generated when using a laser to mark the marks on the uncoated portion of the electrode E2. In some exemplary examples, the fume collector 2119 may be configured to absorb the metal powder or adsorb it using electrostatic attractive forces.

In particular, the fume collector 2119 provided in the positive electrode notching device 210 may be an explosion proof fume collector. Specifically, the fume collector 2119 may be configured to prevent the metal powder from exploding due to an accidental spark or the like.

The measurement data MD may include inspection results that are expressed numerically. For example, the measurement data (MD) may include coordinates and dimensions of a notched portion on the electrode E2. In some exemplary examples, the measurement data MD may further include loading amount data of the coating material on the electrode, dimensional data such as a width of an insulating material provided on the coating material and an overlap width between the coating material and the insulating material, mismatching data between the coating portion lanes on the upper surface of the electrode and the coating portion lanes on the lower surface of the electrode, etc. Here, the loading amount indicates the amount of coating material loaded per unit area of the electrode E2, which may be an area density of the coating material. The measurement data MD may be processed by a set method, such that a positive or negative charge of the measured portion of the electrode may be determined.

The measuring instrument 2130 may include a sensing part 2131 and a processing part 2133. The sensing part 2131 may be configured to sense a physical quantity of the electrode E2 to generate a measurement signal MS. The specific configuration of the sensing part 2131 may be the same as the sensing part 1131 described with reference to FIG. 2, and a detailed description will be omitted here.

The positive electrode notching device 210 may further include an inspection device configured to inspect the electrode E2 to collect inspection data. The inspection data may include a determination of the quality of a portion of the electrode E2 and process events. For example, the inspection data may include data of an appearance of the electrode collected by an image-based device, such as a machine vision, data of breaks and joints in the electrode, data of a portion of the electrode on which a sampling inspection was performed, data of a portion of the electrode planned to be scrapped, and data of the scrapped portion of the electrode, data on the positive and negative charge of the coating material and insulating material on the electrode, data of reference points indicating the location of the electrode, and data of defects such as pinhole defects, crater defects, line defects, crack defects, sideling defects, island defects, fold defects, wrinkle defects, indentation defects, and dent defects. The reference points may be formed at predetermined intervals on the electrode, and the location of other elements on the electrode may be known based on the reference points. The inspection device may be any one of a color sensor, a joint sensor, a reference point sensor, and a machine vision.

The measurement data (MD) and inspection data described above may be time series data, which have been previously described with reference to FIG. 2 and will not be described in detail herein.

The processing part 2133 may be configured to collect the measurement signals MS sensed by the sensing part 2131 to generate the measurement data MD. The processing part 2133 may be wired or wirelessly connected to the sensing part 2131.

The roll map PLC 2171 may be in operative communication with the first and second rotary encoders 2121, 2125, the measuring instrument 2130, and additional measuring instruments and inspection devices through a data network, either wired or wireless. The data network may be one-way or two-way. The data network may be implemented by a public and/or specialized network using physical channels, Wi-Fi, Bluetooth, and/or other frequency bands. The first and second rotary encoders 2121, 2125, the measuring instrument 2130, and additional measuring instruments and inspection devices may be configured to collect data from the equipment, work products, semi-finished products, and products within the positive electrode notching device 210, or to generate signals for collecting data.

The roll map PLC 2171 may be configured to transmit coordinate data (CD) to the processing part 2133. The processing part 2133 may be configured to associate measurement data (MD) to the coordinate data (CD) to generate coordinate-associated measurement data (CMD). In general, the measurement data (MD) may be processed based on trigger points. Examples of processing the measurement data (MD) may include storing the measurement data (MD), manipulating the measurement data (MD) (e.g., generating coordinate-associated measurement data (CMD)), and transmitting the measurement data (MD).

As a non-limiting example, a trigger point for processing the measurement data (MD) may be the completion of scanning. For example, the sensing part 2131 may scan the electrode in a width direction of the electrode, and for each scanning, the measurement data MD may be stored, processed, modulated, and transmitted. In other examples, the trigger point may be the completion of a plurality of scanning, or the completion of a portion of scanning.

The processing part 2133 may be configured to transmit coordinate-associated measurement data (CMD) to the roll map PLC 2171. The roll map PLC 2171 may be configured to transmit the coordinate-associated measurement data (CMD) to the process PLC 2143.

The coordinate-associated measurement data (CMD) transmitted to the process PLC 2143 may be conveyed to the first server 150 through the process PLC 2143 and the equipment interface (EIF) 145. The process PLC 2143 and EIF 145 may relay communication of data, including measurement data (CMD), between the first server 150 and the roll map PLC 2171. However, not limited thereto, the roll map PLC 2171 may be configured to transmit coordinate-associated measurement data (CMD) directly to the first server 150.

The process PLC 2143 may be configured to control the operation of the unwinder 2111, the rewinder 2113, and the notching machine 2115. The process PLC 2143 may be configured to generate signals for operating and stopping the unwinder 2111, the rewinder 2113, and the notching machine 2115.

In some exemplary examples, each of the roll map PLC 2171 and the process PLC 2143 may be part of a one PLC, the second PLC 2140.

For control of the notching process, a communication channel may be installed between the process PLC 2143 and the first server 150 through the EIF 145 and connecting the process PLC 2143 and the first server 150. Accordingly, data transmission through the process PLC 2143 may be performed by the first and second rotary encoders 2121, 2125 and the measuring instrument 2130 directly transmitting the unwinding amount signal (UWAS), winding amount signal (WAS), and measurement signal (MS) to the first server 150, and compared to the case in which the roll map PLC 2171 directly transmits the measurement data (CMD) to the first server 150, the resources needed for the installation of communication channels can be reduced, and the data processing and management may be efficiently performed.

The EIF 145 may be a device for communication between the process PLC 2143 of the manufacturing facility and the first server 150, which is an upper server.

In some exemplary examples, the first server 150 may include a second roll map creating part configured to generate a second roll map. The second roll map may be a process data of the electrode E2 on a plane simulating the electrode E2 moving between the unwinder 2111 and the rewinder 2113. In this case, the first server 150 may act as a roll map creating device.

In some exemplary examples, the roll map PLC 2171 may include a second roll map creating part configured to generate the second roll map. In this case, the roll map PLC 2171 may act as a roll map creating device. Hereinafter, a case in which the first server 150 creates the second roll map will be described. However, the roll map PLC 2171 may also be configured to create a second roll map in an identical, equivalent, or analogous manner to the configuration associated with the first server 150 creating the second roll map.

The second roll map may be generated in a lot unit formed by the winding and cutting of the electrode E2. The second roll map may include data on specifications of the lots. The specifications of the lot may include, for example, a lot number, a length of the wound electrode, a width of the electrode, and a material and composition used in the processing of the electrode

The first server 150 may match the coordinate position of the second roll map generated with the second electrode ID. The first server 150 may define positions corresponding to the second electrode ID based on the reference points on the electrode E2.

The first server 150 may generate a visualization command (VC) for visualizing the second roll map. The first server 150 may convey the visualization command (VC) to a display device 160, and the display device 160 may visualize the second roll map to display the visualized second roll map.

In some exemplary examples, the processing part 2133 may be configured to convey coordinate-associated measurement data (CMD) and/or coordinate data (CD) to the second server 180. According to exemplary examples, the coordinate-associated measurement data (CMD) and coordinate data (CD) may be conveyed to the second server 180 via the eIoT 170. The eIoT 170 may be a device for communication between the processing part 2133 and the second server 180.

In some exemplary examples, the second server 180 may be configured to store and process measurement data (MD) of the electrodes. The second server 180 may continuously monitor the processing of the electrodes based on the measurement data MD, thereby managing the quality of the processing of the electrodes. According to exemplary examples, the second server 180 may be a statistical process controller (SPC). By collecting and analyzing manufacturing data in real or nearly real-time, the second server 180 may timely identify problem conditions and provide alarms to operators before potential problems occur.

The third server 190 may be configured to store coordinate-associated measurement data (CMD) transmitted from the first server 150. The third server 190 may be configured to store measurement data (MD) transmitted from the second server 180. If the first server 150 is an MES and the second server 180 is an SPC, they may be unsuitable for long-term storage of the associated measurement data (CMD), evaluation data (ED), and measurement data (MD). The third server 190 may be a data warehouse, for example, and may store coordinate-associated measurement data (CMD), evaluation data (ED), and measurement data (MD) for a long period of time, such as based on the quality assurance period of a product.

The processing part 2133, the roll map PLC 2171, the process PLC 2143, the EIF 145, the first server 150, the eIoT 170, the second server 180, and the third server 190 may be implemented as hardware, firmware, software, and combinations thereof. For example, the processing part 2133, the roll map PLC 2171, the process PLC 2143, the EIF 145, the first server 150, the eIoT 170, the second server 180, and the third server 190 may include computing devices such as general purpose computers, workstation computers, desktop computers, laptop computers, tablet computers, and the like. The processing part 2133, the roll map PLC 2171, the process PLC 2143, the EIF 145, the first server 150, the eIoT 170, the second server 180, and the third server 190 may include any one of simple controllers, complex processors such as microprocessors, CPU, GPU, and the like, processors configured by software, and dedicated hardware and firmware. The processing part 2133, the roll map PLC 2171, the process PLC 2143, the EIF 145, the first server 150, the eIoT 170, the second server 180, and the third server 190 may be implemented by, for example, general purpose computer processors or application specific hardware such as Digital Signal Process (DSP), Field Programmable Gate Array (FPGA), and Application Specific Integrated Circuit (ASIC).

The first server 150 and the second server 180 may generate a second roll map. Because the first server 150 stores and processes a lot of data for general manufacturing management other than the second roll map, the second roll map stored in the first server 150 may include processed and simplified coordinate-associated measurement data (CMD) instead of the original measurement data (MD). The second server 180 may store the original measurement data (MD) to operate as an SPC. The second server 180 may transmit measurement data (MD) corresponding to a selected portion of the second roll map in response to a command from the first server 150.

An intermediate roll map may further include the measurement data (MD) associated with the second roll map; in other words, the intermediate roll map may further include, in addition to the second roll map, measurement data (MD) that is the original data. The measurement data (MD) may be associated with the second roll map based on a time value. Accordingly, the intermediate roll map may provide additional insight into the quality of the work product, performance of the process, overall equipment effectiveness (OEE) drill-down, anomaly detection, traceability, preventive maintenance, and predictive alarms.

The positive electrode notching device 210 may implement a plug-in architecture with an API for data acquisition to provide plug-and-play connection of the measuring instrument 2130 and additional measuring instruments and inspection devices. Accordingly, resources at a particular process step and at a particular site may be easily relocated to other processes and other sites, or new resources may be easily introduced at each process step and site.

The data network between the elements of the positive electrode notching device 210 may include various types of communication channels, including one-way, two-way wired, and wireless communications. In one example, the data network may include an industrial protocol network such as OPC, Modbus, ProfiNet, etc. The communication channels may be dedicated conduit communications such as Universal Serial Bus (USB), IEEE 802 (Ethernet), IEEE 1394 (FireWire), or other high-speed data communication standards.

In some examples, the positive electrode notching device 210 may further include a manual input system that allows an operator to input manufacturing data. The positive electrode notching device 210 may allow for data input by an operator using an input tool and computer-based input of manufacturing data, such as scraping an excel file.

According to some exemplary examples, the operations of the processing part 2133, the roll map PLC 2171, the process PLC 2143, the EIF 145, the first server 150, the eIoT 170, the second server 180, and the third server 190 may be implemented as commands stored on a machine-readable medium that can be read and executed by one or more processors. Here, the machine-readable medium may include any mechanism for storing and/or transmitting information in a form readable by a machine (e.g., a computing device). For example, the machine-readable medium may include Read Only Memory (ROM), Random Access Memory (RAM), magnetic disk storage media, optical storage media, flash memory, electrical, optical, acoustic, or other forms of propagated signals (e.g., carrier waves, infrared signals, digital signals, etc.), and any other signals.

The processing part 2133, the roll map PLC 2171, the process PLC 2143, the EIF 145, the first server 150, the eIoT 170, the second server 180, and the third server 190 may comprise firmware, software, routines, and commands for performing the operations described above, or any of the processes described below. For example, the firmware, software, routines, and commands of the processing part 2133, the roll map PLC 2171, the process PLC 2143, the EIF 145, the first server 150, the eIoT 170, the second server 180, and the third server 190 may be instantiated in memory.

The processing part 2133, for example, may include software configured to receive coordinate data (CD), generate coordinate-associated measurement data (CMD), and transmit measurement data (MD), coordinate data (CD), and coordinate-associated measurement data (CMD).

The roll map PLC 2171, for example, may include software configured to collect coordinate data (CD), receive coordinate-associated measurement data (CMD), and transmit coordinate data (CD) and coordinate-associated measurement data (CMD).

The process PLC 2143 may include software configured to generate control signals for controlling the unwinder 2111, the rewinder 2113, and the notching machine 2115 based on the product ID and the product recipe, receive coordinate data (CD) and coordinate-associated measurement data (CMD), and transmit coordinate data (CD) and coordinate-associated measurement data (CMD).

The EIF 145 may include software for relaying the transmission of data and information between the process PLC 2143 and the first server 150. More specifically, the EIF 145 may include software configured to perform flow control, error control, synchronization, sequence control, addressing, multiplexing, routing, and formatting of communications between the process PLC 2143 and the first server 150.

The first server 150, for example, may include software configured to convey product ID and product recipes to the process PLC 2143 and generate a second roll map based on coordinate-associated measurement data (CMD).

The eIoT 170 may include software configured to collect, store, process, and transmit coordinate data (CD), coordinate-associated measurement data (CMD), and/or time serial data such as measurement data (MD).

The second server 180 may include software configured to store time series data, coordinate data (CD), and/or coordinate-associated measurement data (CMD), such as measurement data (MD), monitor a process based on the time series data, coordinate data (CD), and/or coordinate-associated measurement data (CMD), and transmit the time series data, coordinate data (CD), and/or coordinate-associated measurement data (CMD) in response to a request of the first server 150.

The third server 190 may include software configured to receive and store the coordinate-associated measurement data (CMD), evaluation data (ED), and/or measurement data (MD), and to retrieve the coordinate-associated measurement data (CMD), evaluation data (ED), and/or measurement data (MD).

However, this is for ease of description only, and the operations of the processing part 2133, the roll map PLC 2171, the process PLC 2143, the EIF 145, the first server 150, the eIoT 170, the second server 180, and the third server 190 described above may be caused by other devices executing computing devices, distributed computing devices, processors, firmware, software, routines and commands, etc.

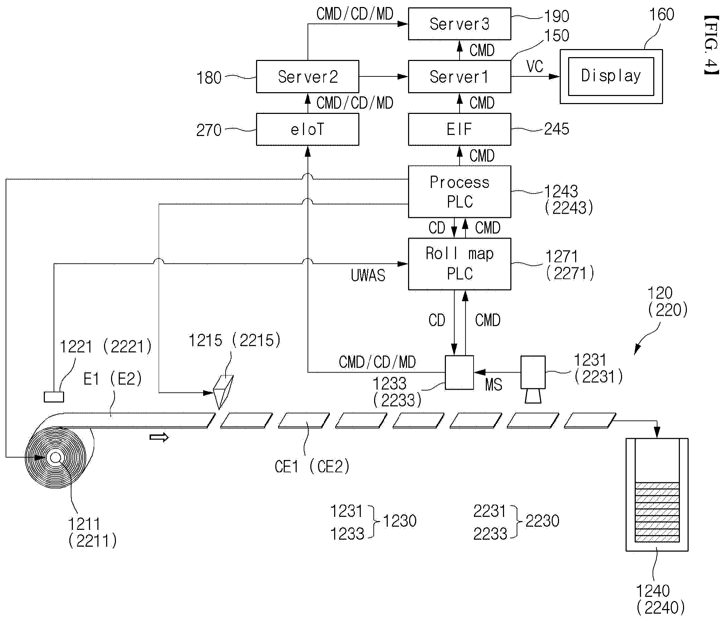

FIG. 4 is a schematic diagram schematically illustrating a first cutting device and a second cutting device and an upper system connected thereto. The first cutting device 120 and the second cutting device 220 are described in one drawing because they differ only in the electrodes E1 and E2 to be processed, and the components comprising them are generally the same.

Referring to FIG. 4, the first cutting device 120 may include an unwinder 1211, a cutter 1215, a rotary encoder 1221, a measuring instrument 1230, a cut electrode container 1240, a roll map PLC 1271, and a process PLC 1243. In addition, the second cutting device 220 may include an unwinder 2211, a cutter 2215, a rotary encoder 2221, a measuring instrument 2230, a cut electrode container 2240, a roll map PLC 2271, and a process PLC 2243.

The unwinders 1211, 2211 may be provided with an electrode roll manufactured in a previous notching process, and the unwinders 1211, 2211 may be configured to unwind the electrode roll.

The rotary encoders 1221, 2221 may be configured to detect the extent to which the electrodes E1, E2 are unwound by the unwinders 1211, 2211. The rotary encoders 1221, 2221 may be configured to be contact or non-contact. In some exemplary examples, the rotary encoders 1221, 2221 may be configured to sense a length by which the electrodes E1, E2 are unwound by the unwinders 1211, 2211. Accordingly, the rotary encoders 1221, 2221 may be configured to generate an unwinding amount signal (UWAS) representative of the length to which the electrodes E1, E2 are unwound, and transmit it to the roll map PLC 1271, 2271 described in more detail hereinafter. The roll map PLCs 1271, 2271 may be configured to collect unwinding amount data based on the received said unwinding amount signal (UWAS).

The cutters 1215, 2215 may be configured to manufacture a plurality of individual negative electrodes CE1 and individual positive electrodes CE2 by cutting the electrodes E1 , E2 with a predetermined means, such as a laser. The cutters 1215, 2215 may be any device known in the art to which the present disclosure belongs. The cut plurality of individual negative electrodes CE1 may be sequentially accommodated within the individual negative electrode container 1240, and the cut plurality of individual positive electrodes CE2 may be sequentially accommodated within the individual positive electrode container 2240.

The measuring instruments 1230, 2230 may be configured to measure the individual electrodes CE1, CE2 to collect measurement data (MD) of the individual electrodes CE1, CE2 that are unwound and cut from the unwinders 1211, 2211. The measuring instruments 1230, 2230 may measure the individual electrodes CE1, CE2 in a scanning method.

The measuring instruments 1230, 2230 may include sensing parts 1231, 2231 and processing parts 1233, 2233. The sensing parts 1231, 2231 may be configured to sense physical quantity of the individual electrodes CE1, CE2 to generate a measurement signal MS. In some exemplary examples, the sensing parts 1231, 2231 may be configured to recognize marks on the individual electrodes CE1, CE2 and corresponding to a first electrode ID or a second electrode ID. The marks may be barcodes or QR codes.

Since the configuration of the sensing parts 1231, 2231 may be substantially the same as the sensing parts 1131, 2131 described with reference to FIGS. 2 or 3, further description is omitted here.

In some exemplary examples, the first cutting device 120 and the second cutting device 220 may further include an inspection device configured to inspect the individual electrodes CE1 , CE2 to collect inspection data. The inspection data may include a determination of the quality of a portion of the individual electrodes CE1, CE2 and process events.

The above-described measurement data (MD) and inspection data may be time series data, which has been previously described with reference to FIG. 2 and will not be described in detail herein.

The processing parts 1233, 2233 may be configured to collect the measurement signal MS sensed by the sensing parts 1231, 2231 to generate the measurement data (MD). The processing parts 1233, 2233 may be wired or wirelessly connected to the sensing parts 1231, 2231.

The roll map PLC 1271, 2271 may be in operative communication with the rotary encoders 1211, 2211, the measuring instruments 1230, 2230, and additional measuring instruments and inspection devices through a data network, either wired or wireless. The data network may be one-way or two-way. The data network may be implemented by a public and/or specialized network using physical channels, Wi-Fi, Bluetooth, and/or other frequency bands. The rotary encoders 1211, 2211, the measuring instruments 1230, 2230, and additional measuring instruments and inspection devices may be configured to collect data from the equipment, work products, semi-finished products, and products within the first cutting device 120 and the second cutting device 220, or to generate signals for the collecting data.

In some exemplary examples, the roll map PLCs 1271, 2271 may be configured to transmit coordinate data (CD) to the processing part 2133. The processing parts 1233, 2233 may be configured to associate measurement data (MD) with the coordinate data (CD) to generate coordinate-associated measurement data (CMD). In general, the measurement data (MD) may be processed based on the trigger points. Examples of processing the measurement data (MD) may include storing the measurement data (MD), manipulating the measurement data (MD) (e.g., generating the coordinate-associated measurement data (CMD)), and transmitting the measurement data (MD).

The processing part 1233, 2233 may be configured to transmit coordinate-associated measurement data (CMD) to a roll map PLC 1271, 2271. The roll map PLC 1271, 2271 may be configured to transmit the coordinate-associated measurement data (CMD) to the process PLC 1243, 2243.

The coordinate-associated measurement data (CMD) transmitted to the process PLCs 1243, 2243 may be conveyed to the first server 150 through the process PLCs 1243, 2243 and the equipment interface (EIF) 245. The process PLCs 1243, 2243 and EIF 245 may relay communication of data, including measurement data (CMD), between the first server 150 and the roll map PLCs 1271, 2271. However, not limited thereto, the roll map PLCs 1271, 2271 may be configured to transmit coordinate-associated measurement data (CMD) directly to the first server 150.

The process PLCs 1243, 2243 may be configured to control the operation of the unwinders 1211, 2211, and the cutters 1215, 2215. The process PLCs 2143, 2243 may be configured to generate signals for operating and stopping the unwinders 1211, 2211, and the cutters 1215, 2215.

For control of the cutting process, a communication channel may be installed between the process PLCs 1243, 2243 and the first server 150 via the EIF 245 and connecting the process PLCs 1243, 2243 and the first server 150. Accordingly, the data transmission through the process PLC 1243, 2243 as compared to the case in which the rotary encoders 1221, 2221 and the measuring instruments 1230, 2230 directly transmit the unwinding amount signal (UWAS) and the measurement signal (MS) to the first server 150, and the case in which the roll map PLC 1271, 2271 directly transmits the measurement data (CMD) to the first server 150, the resources needed for the installation of the communication channel may be reduced, and the data processing and management may be efficiently performed.

The EIF 245 may be a device for communication between the process PLCs 1243, 2243 of the manufacturing facility and the first server 150 as an upper server.

In some exemplary examples, the processing parts 1233, 2233 may be configured to convey coordinate-associated measurement data (CMD) and/or coordinate data (CD) to the second server 180. According to exemplary examples, the coordinate-associated measurement data (CMD) and coordinate data (CD) may be conveyed to the second server 180 via the eIoT 270. The eIoT 270 may be a device for communication between the processing parts 1233, 2233 and the second server 180.

In some exemplary examples, the second server 180 may be configured to store and process measurement data (MD) of the electrodes. The second server 180 may continuously monitor the processing of the electrodes based on the measurement data MD, thereby managing the quality of the processing of the electrodes. According to exemplary examples, the second server 180 may be a statistical process controller (SPC). By collecting and analyzing manufacturing data real time or nearly real-time, the second server 180 may timely identify problem conditions and provide alarms to operators before potential problems occur.

The third server 190 may be configured to store coordinate-associated measurement data (CMD) transmitted from the first server 150. The third server 190 may be configured to store measurement data (MD) transmitted from the second server 180. If the first server 150 is an MES and the second server 180 is an SPC, they may be unsuitable for long-term storage of the associated measurement data (CMD), evaluation data (ED), and measurement data (MD). The third server 190 may be a data warehouse, for example, and may store coordinate-associated measurement data (CMD), evaluation data (ED), and measurement data (MD) for a long period of time, such as based on the quality assurance period of a product.

The processing parts 1233, 2233, the roll map PLCs 1271, 2271, the process PLCs 1243, 2243, the EIF 245, the first server 150, the eIoT 270, the second server 180, and the third server 190 may be implemented as hardware, firmware, software, and combinations thereof. For example, the processing parts 1233, 2233, the roll map PLCs 1271, 2271, the process PLCs 1243, 2243, the EIF 245, the first server 150, the eIoT 270, the second server 180, and the third server 190 may include computing devices such as general purpose computers, workstation computers, desktop computers, laptop computers, tablet computers, and the like. The processing parts 1233, 2233, the roll map PLCs 1271, 2271, the process PLCs 1243, 2243, the EIF 245, the first server 150, the eIoT 270, the second server 180, and the third server 190 may include any one of simple controllers, complex processors such as microprocessors, CPU, GPU, and the like, processors configured by software, and dedicated hardware and firmware. The processing part 1233, 2233, the roll map PLCs 1271, 2271, the process PLCs 1243, 2243, the EIF 245, the first server 150, the eIoT 270, the second server 180, and the third server 190 may be implemented by, for example, general purpose computer processors or application specific hardware such as Digital Signal Process (DSP), Field Programmable Gate Array (FPGA), and Application Specific Integrated Circuit (ASIC).

The data network between the elements of the first cutting device 120 and the second cutting device 220 may include various types of communication channels, including one-way, two-way wired, and wireless communications. In one example, the data network may include an industrial protocol network such as OPC, Modbus, ProfiNet, etc. The communication channels may be dedicated conduit communications, such as Universal Serial Bus (USB), IEEE 802 (Ethernet), IEEE 1394 (FireWire), or other high-speed data communication standards.

In some examples, the first cutting device 120 and the second cutting device 220 may further include a manual input system that allows an operator to input manufacturing data. The first cutting device 120 and the second cutting device 220 may allow for data input by an operator using an input tool and computer-based input of manufacturing data, such as scraping an excel file.

The processing parts 1233, 2233, for example, may include software configured to receive coordinate data (CD), generate coordinate-associated measurement data (CMD), and transmit measurement data (MD), coordinate data (CD), and coordinate-associated measurement data (CMD).

The roll map PLCs 1271, 2271, for example, may include software configured to collect coordinate data (CD), receive coordinate-associated measurement data (CMD), and transmit coordinate data (CD) and coordinate-associated measurement data (CMD).

The process PLCs 1243, 2243 may include software configured to generate control signals for controlling the unwinders 1211, 2211 and the cutters 1215, 2215 based on the first electrode ID and the second electrode ID, receive coordinate data (CD) and coordinate-associated measurement data (CMD), and transmit the coordinate data (CD) and coordinate-associated measurement data (CMD).

The EIF 245 may include software for relaying the transmission of data and information between the process PLCs 1243, 2243 and the first server 150. More specifically, the EIF 245 may include software configured to perform flow control, error control, synchronization, sequence control, addressing, multiplexing, routing, and formatting of communications between the process PLCs 1243, 2243 and the first server 150.

The first server 150, for example, may include software configured to convey the first and second electrode IDs to the process PLCs 1243, 2243, and to update the first roll map and/or the second roll map based on coordinate-associated measurement data (CMD). The updating of the first roll map may be performed based on measurement data and inspection data obtained from the first cutting device 120. In addition, the updating of the second roll map may be performed based on measurement and inspection data obtained from the second cutting device 220.

The eIoT 270 may include software configured to collect, store, process, and transmit time series data, coordinate data (CD), and/or coordinate-associated measurement data (CMD), such as measurement data (MD).

The above-described second server 180 and the third server 190 have been previously described with reference to FIG. 2 and FIG. 3 and will not be described in detail herein.

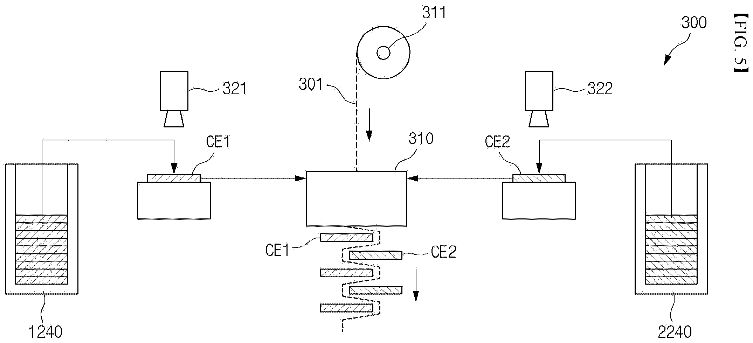

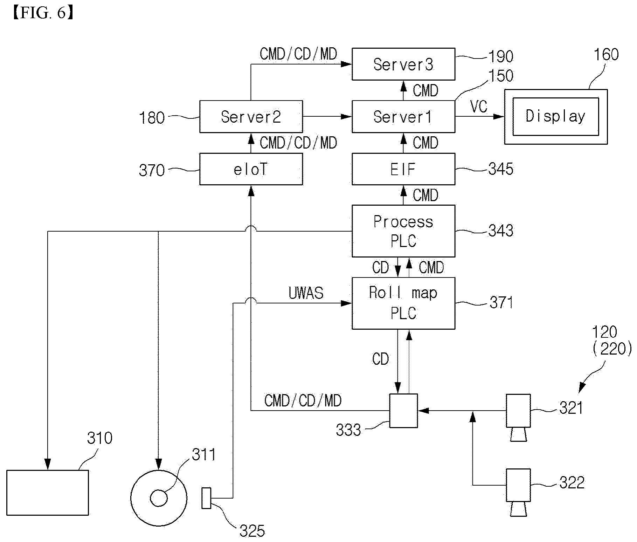

FIG. 5 is a conceptual diagram schematically illustrating a stacking device according to an embodiment of the present disclosure. FIG. 6 is a schematic diagram conceptually illustrating an important part of the stacking device of FIG. 5 and an upper system connected thereto.

Referring to FIG. 5 and FIG. 6, after picking up the individual electrodes CE1, CE2 from the cut electrode containers 1240, 2240, the individual electrodes CE1, CE2 are stacked such that the individual negative electrode CE1 and the individual positive electrode CE2 are alternately positioned with the separator 301 therebetween.

Specifically, the individual negative electrode CE1 is picked up from the individual negative electrode container 1240 accommodating the individual negative electrode CE1 and positioned on a predetermined work stage. Then, the markings of the individual negative electrode CE1 are read by the first reader 321. Further, the individual positive electrode CE2 is picked up from the individual positive electrode container 2240 accommodating the individual positive electrode CE2 and positioned on another work stage. Then, the markings of the individual positive electrode CE2 are read by the second reader 322.

The individual negative electrodes CE1 and individual positive electrodes CE2 whose markings corresponding to the respective electrode IDs are recognized by the first reader 321 and the second reader 322 may be transferred to the stacker 310 to be stacked alternately with each other. The transfer may be performed, for example, by a pick-and-place tool.

The separator supply device 311 may supply separators 301 for stacking by crossing with individual negative electrodes CE1 and individual positive electrodes CE2. The separator supply device 311 may intersect and stack the separator 301 in the form of a film according to a zigzag stacking method. The separator 301 may be cut after an appropriate number of individual electrodes CE1, CE2 are stacked, thereby obtaining one electrode assembly.

The separator supply device 311 may be provided with the separator 301 in the form of a roll, and the separator supply device 311 may be configured to unwind the separator 301. A rotary encoder 325 provided on one side of the separator supply device 311 may be configured to detect the extent to which the separator 301 is unwound by the separator supply device 311. The rotary encoder 325 may be configured to be contact or contactless.

In some exemplary examples, the rotary encoder 325 may be configured to sense the length by which the separator 301 is unwound by the separator supply device 311. Accordingly, the rotary encoder 325 may be configured to generate an unwinding amount signal (UWAS) representative of the length to which the separator 301 is unwound and transmit it to the roll map PLC 371 described in more detail hereinafter. The roll map PLC 371 may be configured to collect unwinding amount data based on the received unwinding amount signal (UWAS).

The processing part 333 may receive as input the first electrode ID of the individual negative electrode CE1 recognized by the first reader 321 and the second electrode ID of the individual positive electrode CE2 recognized by the second reader 322 and provide them to the roll map PLC 371. The processing part 333 may be wired or wirelessly connected to the first reader 321 and/or the second reader 322.

The roll map PLC 371 may be in operative communication with the rotary encoder 325 and the processing part 333 through a data network, either wired or wireless. The data network may be one-way or two-way. The data network may be implemented by a public and/or specialized network using physical channels, Wi-Fi, Bluetooth, and/or other frequency bands.

In some exemplary examples, the roll map PLC 371 may be configured to generate battery cell IDs corresponding to the one electrode assembly. The battery cell IDs may be representative of the first electrode IDs of the individual negative electrodes CE1 and the second electrode IDs of the individual positive electrodes CE2 included within the one electrode assembly. In some exemplary examples, the electrode IDs of the individual electrodes CE1, CE2 included within the one electrode assembly may be matched to each other through the battery cell IDs.

In some exemplary examples, the first server 150 may match the electrode IDs of the individual electrodes CE1, CE2 included within the one electrode assembly to each other with the battery cell IDs, in other words, the first electrode IDs and the second electrode IDs of the individual electrodes CE1, CE2 included within the one electrode assembly may be matched by the first server 150 with the battery cell IDs of the battery cells comprising the electrode assembly.

In some exemplary examples, the roll map PLC 371 may generate any one of the plurality of first electrode IDs and the plurality of second electrode IDs included within one electrode assembly as the battery cell ID representative of the electrode assembly.

In some exemplary examples, the roll map PLC 371 may be configured to transmit coordinate data (CD) to the processing part 333. The processing part 333 may be configured to associate the coordinate data (CD) with the first electrode ID and the second electrode ID. In some exemplary examples, the processing part 333 may be configured to transmit the coordinate-associated first electrode ID and second electrode ID to the roll map PLC 371. The roll map PLC 371 may be configured to transmit the coordinate-associated first electrode ID and the second electrode ID to the process PLC 343.

The coordinate-associated first electrode IDs and second electrode IDs transmitted to the process PLC 343 may be conveyed to the first server 150 through the process PLC 343 and the equipment interface (EIF) 345. The process PLC 343 and EIF 345 may relay communication of data, including the coordinate-associated first electrode ID and second electrode ID, between the first server 150 and the roll map PLC 371. However, not limited thereto, the roll map PLC 371 may be configured to transmit the coordinate-associated first electrode IDs and second electrode IDs directly to the first server 150.

The process PLC 343 may be configured to control the operation of the stacker 310 and the separator supply device 311. The process PLC 343 may be configured to generate signals for operating and stopping the stacker 310 and the separator supply device 311.

In some exemplary examples, for control of the stacking process, a communication channel may be installed between the process PLC 343 and the first server 150 through the EIF 345 and connecting the process PLC 343 and the first server 150. In some exemplary examples, the EIF 345 may be a device for communication between the process PLC 343 of the manufacturing facility and the first server 150, which is an upper server.

In some exemplary examples, the processing part 333 may be configured to convey coordinate associated first electrode IDs and second electrode IDs and/or coordinate data (CD) to the second server 180. According to exemplary examples, the coordinate-associated first electrode ID and second electrode ID and coordinate data CD may be conveyed to the second server 180 via the eIoT 370. The eIoT 370 may be a device for communication between the processing part 333 and the second server 180.

In some exemplary examples, the first server 150 may be configured to output corresponding first electrode IDs and second electrode IDs with regard to the battery cell ID. In other words, the electrode assembly represented by the battery cell ID includes a plurality of individual negative electrodes CE1 and a plurality of individual positive electrodes CE2. As previously described with reference to FIGS. 2 to 4, the plurality of individual negative electrodes CE1 have respective first electrode IDs and the plurality of individual positive electrodes CE2 have respective second electrode IDs. Thus, there are first electrode IDs and second electrode IDs corresponding to a battery cell ID, and the first server 150 may be configured to output information regarding the remaining of the battery cell ID, the first electrode IDs, and the second electrode IDs when given any one of the battery cell IDs, the first electrode IDs, and the second electrode IDs.

Further, the first server 150 may be configured to output coordinates on a first roll map corresponding to the first electrode IDs and coordinates on a second roll map corresponding to the second electrode IDs with regard to the battery cell IDs.

In some exemplary examples, the second server 180 may be configured for storing and processing the coordinate-associated first electrode IDs and second electrode IDs. The second server 180 may continuously monitor the processing of the individual electrodes CE1, CE2 based on the coordinate-associated first electrode ID and the second electrode ID, thereby managing the quality of the processing of the individual electrodes CE1, CE2. According to exemplary examples, the second server 180 may be a statistical process controller (SPC). By collecting and analyzing manufacturing data in real or nearly real-time, the second server 180 may timely identify problem conditions and provide alarms to operators before potential problems occur.

The third server 190 may be configured to store coordinate-associated first electrode IDs and second electrode IDs transmitted from the first server 150. The third server 190 may be configured to store the coordinate-associated first electrode ID and the second electrode ID transmitted from the second server 180. If the first server 150 is an MES and the second server 180 is an SPC, they may be unsuitable for long-term storage of the coordinate-associated first electrode IDs and second electrode IDs. The third server 190 may be a data warehouse, for example, and may store the coordinate-associated first electrode ID and second electrode ID for a long period of time, such as based on a quality assurance period of a product.

The processing part 333, the roll map PLC 371, the process PLC 343, the EIF 345, the first server 150, the eIoT 370, the second server 180, and the third server 190 may be implemented as hardware, firmware, software, and combinations thereof. For example, the processing part 333, the roll map PLC 371, the process PLC 343, the EIF 345, the first server 150, the eIoT 370, the second server 180, and the third server 190 may include computing devices such as general purpose computers, workstation computers, desktop computers, laptop computers, tablet computers, and the like. The processing part 333, the roll map PLC 371, the process PLC 343, the EIF 345, the first server 150, the eIoT 370, the second server 180, and the third server 190 may include any one of simple controllers, complex processors such as microprocessors, CPU, GPU, and the like, processors configured by software, and dedicated hardware and firmware. The processing part 333, roll map PLC 371, process PLC 343, EIF 345, first server 150, eIoT 370, second server 180, and third server 190 may be implemented by, for example, general purpose computer processors or application specific hardware such as Digital Signal Process (DSP), Field Programmable Gate Array (FPGA), and Application Specific Integrated Circuit (ASIC).

The data network between the elements of the stacking device 300 may include various types of communication channels, including one-way, two-way wired, and wireless communications. In one example, the data network may include an industrial protocol network such as OPC, Modbus, ProfiNet, etc. The communication channels may be dedicated conduit communications such as Universal Serial Bus (USB), IEEE 802 (Ethernet), IEEE 1394 (FireWire), or other high-speed data communication standards.

In some examples, the stacking device 300 may further include a manual input system that allows an operator to input manufacturing data. The stacking device 300 may allow for data input by an operator using an input tool and computer-based input of manufacturing data, such as scraping an excel file.

The processing part 333, for example, may include software configured to receive the first electrode ID and the second electrode ID, generate the coordinate-associated first electrode ID and the second electrode ID, and transmit the coordinate-associated first electrode ID and the second electrode ID.

The roll map PLC 371, for example, may include software configured to collect coordinate data (CD), receive coordinate-associated first electrode IDs and second electrode IDs, and transmit coordinate data (CD) and coordinate-associated first electrode IDs and second electrode IDs.

The process PLC 343 may include software configured to generate control signals for controlling the stacker 310 and the separator supply device 311 based on the first electrode ID and the second electrode ID, receive the coordinate data (CD) and the coordinate-associated first electrode ID and the second electrode ID, and transmit the coordinate data (CD) and the coordinate-associated first electrode ID and the second electrode ID.

The EIF 345 may include software for relaying the transmission of data and information between the process PLC 343 and the first server 150. More specifically, the EIF 345 may include software configured to perform flow control, error control, synchronization, sequence control, addressing, multiplexing, routing, and formatting of communications between the process PLC 343 and the first server 150.

The eIoT 370 may include software configured to collect, store, process, and transmit coordinate-associated first electrode IDs and second electrode IDs.

The second server 180 and the third server 190 have been described with reference to FIGS. 2 and 3 and will not be described in detail herein.

As described above, the battery manufacturing device 10 may match the battery cell ID with the first electrode IDs of the individual negative electrodes included therein and the second electrode IDs of the individual positive electrodes. In addition, coordinates on a corresponding first roll map may be extracted from the first electrode IDs, and coordinates on a corresponding second roll map may be extracted from the second electrode IDs. As a result, even after the assembly process, it is possible to trace the specific coordinates on the electrode rolls, if needed, by verifying the battery cell IDs. This enables the reduction of product defects and provides information for process improvement.

### (Second Exemplary Example)

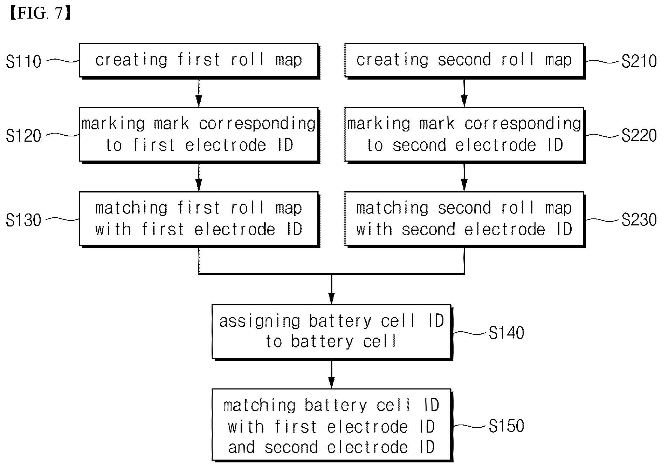

FIG. 7 is a flow diagram illustrating a battery manufacturing method according to an embodiment of the present disclosure.

Referring to FIG. 1 and FIG. 7, a first roll map is created in the negative electrode notching device 110 (S110), and a second roll map is created in the positive electrode notching device 210 (S210).

In addition, a mark corresponding to the first electrode ID is marked on the notched electrode E1 in the negative electrode notching device 110 (S120), and a mark corresponding to the second electrode ID is marked on the notched electrode E2 in the positive electrode notching device 210 (S220).

Although it is shown in FIG. 7 that the step of creating a first roll map (S110) followed by the step of marking a mark corresponding to the first electrode ID (S120) is performed, the present disclosure is not limited thereto. In some exemplary examples, the step of marking the mark corresponding to the first electrode ID (S120) may be performed prior to the step of creating the first roll map (S110). In some exemplary examples, the step of creating the first roll map (S110) and the step of marking the mark corresponding to the first electrode ID (S120) may be performed in a temporal overlap. In some exemplary examples, the step of creating the first roll map (S110) and the step of marking the mark corresponding to the first electrode ID (S120) may be performed simultaneously.

Similarly, although the step of marking a mark corresponding to the second electrode ID (S220) is shown as performed following the step of creating the second roll map (S210), the present disclosure is not limited thereto. In some exemplary examples, the step of marking the mark corresponding to the second electrode ID (S220) may be performed prior to the step of creating the second roll map (S210). In some exemplary examples, the step of creating the second roll map (S210) and the step of marking the mark corresponding to the second electrode ID (S220) may be performed in a temporal overlap. In some exemplary examples, the step of creating the second roll map (S210) and the step of marking the mark corresponding to the second electrode ID (S220) may be performed simultaneously.

Then, the first roll map and the first electrode ID may be matched (S130), and the second roll map and the second electrode ID may be matched (S230). As described with reference to FIGS. 2 to 4, matching the first roll map with the first electrode ID and matching the second roll map with the second electrode ID may be performed in the first server 150.

Then, a plurality of individual negative electrodes CE1 and a plurality of individual positive electrodes CE2 are then stacked in a stacking process with a separator interposed therebetween to form an electrode assembly. A battery cell including the electrode assembly may be assigned a battery cell ID (S140). In some exemplary examples, the assignment of the battery cell ID may be performed by a roll map PLC 371 of the stacking process (refer to FIG. 6).

Then, the battery cell IDs and the first electrode IDs and the second electrode IDs may be matched with each other (S150). The first electrode IDs are first electrode IDs assigned to each of individual negative electrodes CE1 included in the battery cell represented by the battery cell ID. The second electrode IDs are second electrode IDs assigned to each of individual positive electrodes CE2 included within the battery cell represented by the battery cell ID. The matching of the battery cell IDs with the first electrode IDs and the second electrode IDs may be performed by the first server 150.

As above, although exemplary examples of the present disclosure have been described in detail, a person of ordinary skill in the art to which the present disclosure belongs will be able to implement the present disclosure in various modifications without departing from the spirit and scope of the present disclosure as defined in the appended claims. Therefore, further modifications of exemplary examples of the present disclosure will not depart from the technology of the present disclosure.

## Claims

1. A battery manufacturing apparatus, comprising:
a negative electrode notching device configured to assign a first electrode ID to a first notched electrode for a plurality of first notched electrodes;
a first cutting device for separating the plurality of first notched electrodes to which the first electrode IDs are assigned into individual negative electrodes;
a positive electrode notching device configured to assign a second electrode ID to a second notched electrode for a plurality of second notched electrodes;
a second cutting device for separating the plurality of second notched electrodes to which the second IDs are assigned into individual positive electrodes;
a stacking device configured to stack the individual positive electrodes and the individual negative electrodes with a separator therebetween; and
a roll map creating device,
wherein the roll map creating device is configured to create a first roll map indicating process data of a negative electrode on a plane simulating the negative electrode moving between an unwinder and a rewinder of the negative electrode notching device, and
create a second roll map indicating process data of a positive electrode on a plane simulating the positive electrode moving between an unwinder and a rewinder of the positive electrode notching device,
wherein the negative electrode notching device comprises a first marking device which is capable of marking a mark corresponding to a first electrode ID on an uncoated portion of the negative electrode, and
the positive electrode notching device comprises a second marking device which is capable of marking a mark corresponding to a second electrode ID on an uncoated portion of the positive electrode.

2. The battery manufacturing device of claim 1, wherein the roll map creating device is configured to match the first electrode ID with the first roll map and match the second electrode ID with the second roll map.

3. The battery manufacturing device of claim 2, wherein the roll map creating device is configured to match the second electrode IDs of one or more positive electrodes with the first electrode IDs of one or more negative electrodes, the one or more negative electrodes and the one or more positive electrodes being stacked in the stacking device.

4. The battery manufacturing device of claim 3, wherein the roll map creating device is configured to generate a battery cell ID that is representative of the first electrode IDs of the negative electrodes and the second electrode IDs of the positive electrodes stacked in one battery cell, and
to match the first electrode IDs with the second electrode IDs represented by the generated battery cell ID.

5. The battery manufacturing device of claim 1, wherein the second marking device is configured to mark a mark corresponding to the second electrode ID with a laser,
wherein the second marking device comprises a fume collector.

6. The battery manufacturing device of claim 1, wherein the roll map creating device is configured to generate a battery cell ID representative of any one of the first and second electrode IDs.

7. The battery manufacturing device of claim 6, wherein the roll map creating device is configured to output, for respective battery cell IDs, corresponding first electrode IDs, second electrode IDs, coordinates on a first roll map corresponding to the first electrode IDs, and coordinates on a second roll map corresponding to the second electrode IDs.

8. The battery manufacturing device of claim 1, wherein the roll map creating device is configured to update the first roll map based on process data from the first cutting device, and to update the second roll map based on process data from the second cutting device.

9. The battery manufacturing device of claim 1, wherein the process data comprises inspection data and/or measurement data.

10. The battery manufacturing device of claim 9, wherein the roll map creating device comprises a first roll map creating part for creating the first roll map and a second roll map creating part for creating the second roll map,
wherein the first roll map creating part is provided within a controller configured to control operation of the negative electrode notching device, and
the second roll map creating part is provided within a controller configured to control operation of the positive electrode notching device.

11. A battery manufacturing device comprising a stacking device and a first server,
wherein the stacking device comprises:
a first reader configured to read a mark on at least a portion of an individual negative electrode, which represents a first electrode ID;
a second reader configured to read a mark on at least a portion of an individual positive electrode, which represents a second electrode ID;
a stacker configured to stack individual negative electrodes and individual positive electrodes, with a separator interposed therebetween, to manufacture a battery cell; and
a controller configured to control operation of the stacker,
wherein the first server is configured to assign a first electrode ID to an individual negative electrode for the individual negative electrodes and assign a second electrode ID to an individual positive electrode for the individual positive electrodes, which are represented by a battery cell ID included in the battery cell.

12. The battery manufacturing device of claim 11, further comprises a roll map creating device,
wherein the roll map creating device is configured to create a first roll map indicating process data of a negative electrode on a plane simulating the negative electrode moving between an unwinder and a rewinder of the negative electrode notching device, matching a first electrode ID with the first roll map; and
create a second roll map indicating process data of a positive electrode on a plane simulating the positive electrode moving between an unwinder and a rewinder of the positive electrode notching device, matching a second electrode ID with the second roll map.

13. The battery manufacturing device of claim 12, wherein the roll map creating device is provided within the first server.

14. The battery manufacturing device of claim 12, further comprising a roll map controller,
wherein the roll map creating device is provided within the roll map controller.

15. The battery manufacturing device of claim 12, wherein the first server is configured to extract, from a battery cell ID, first electrode IDs of individual negative electrodes and second electrode IDs of individual positive electrodes included in a battery cell,
extract, using the first electrode IDs, coordinates on the first roll map corresponding to the first electrode IDs, and
extract, using the second electrode IDs, coordinates on the second roll map corresponding to the second electrode IDs.
